**Europäisches Patentamt**

**European Patent Office**

**Office européen des brevets**

(19)

(11) Veröffentlichungsnummer: **0 017 786**
**A1**

(12) **EUROPÄISCHE PATENTANMELDUNG**

(21) Anmeldenummer: **80101484.6**

(22) Anmeldetag: **21.03.80**

(51) Int. Cl.³: **E 02 B 15/04**

㉚ ˙ Priorität: **21.03.79 DE 2910975**

(43) Veröffentlichungstag der Anmeldung: **29.10.80**
**Patentblatt 80/22**

(84) Benannte Vertragsstaaten: **BE FR GB NL**

�['71'] Anmelder: **Dietzel, Karl, Dr., Friedensstrasse 215,**
**D-4150 Krefeld 11 (DE)**

(72) Erfinder: **Dietzel, Karl, Dr., Friedensstrasse 215,**
**D-4150 Krefeld 11 (DE)**
Erfinder: **Dietzel, Jochen, Friedensstrasse 215,**
**D-4150 Krefeld 11 (DE)**

(54) Verfahren zur Vermeidung der Ausbreitung von durch Tankerunfälle auf dem Meer ausgelaufenem Rohöl.

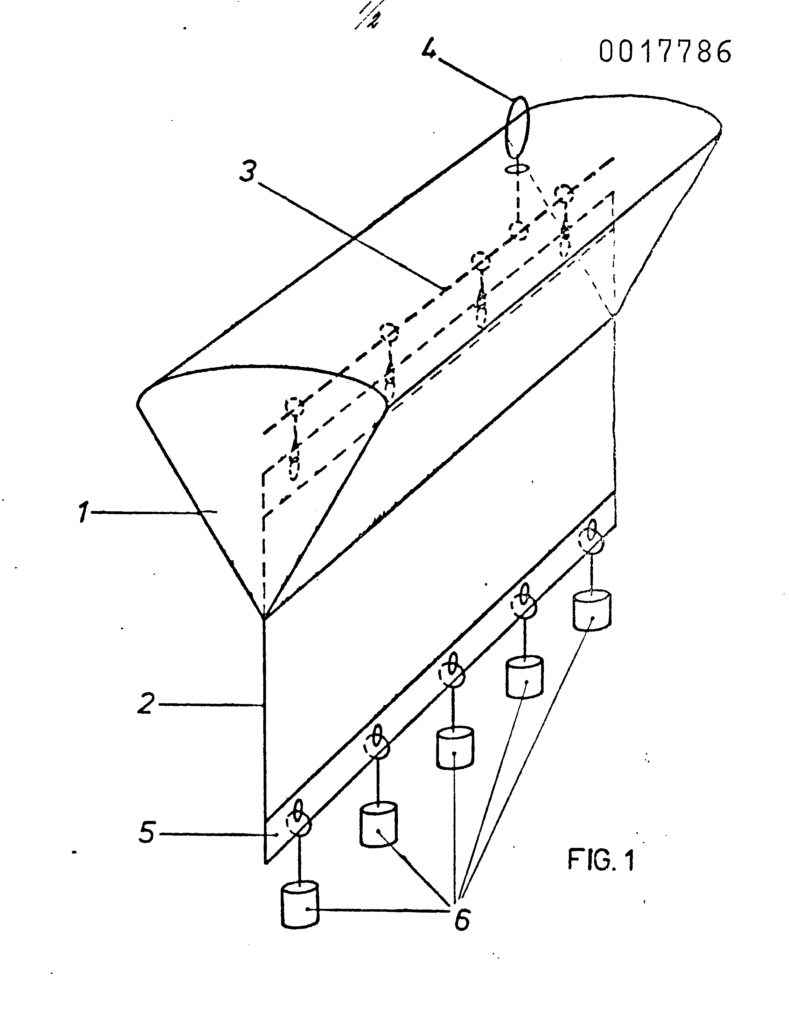

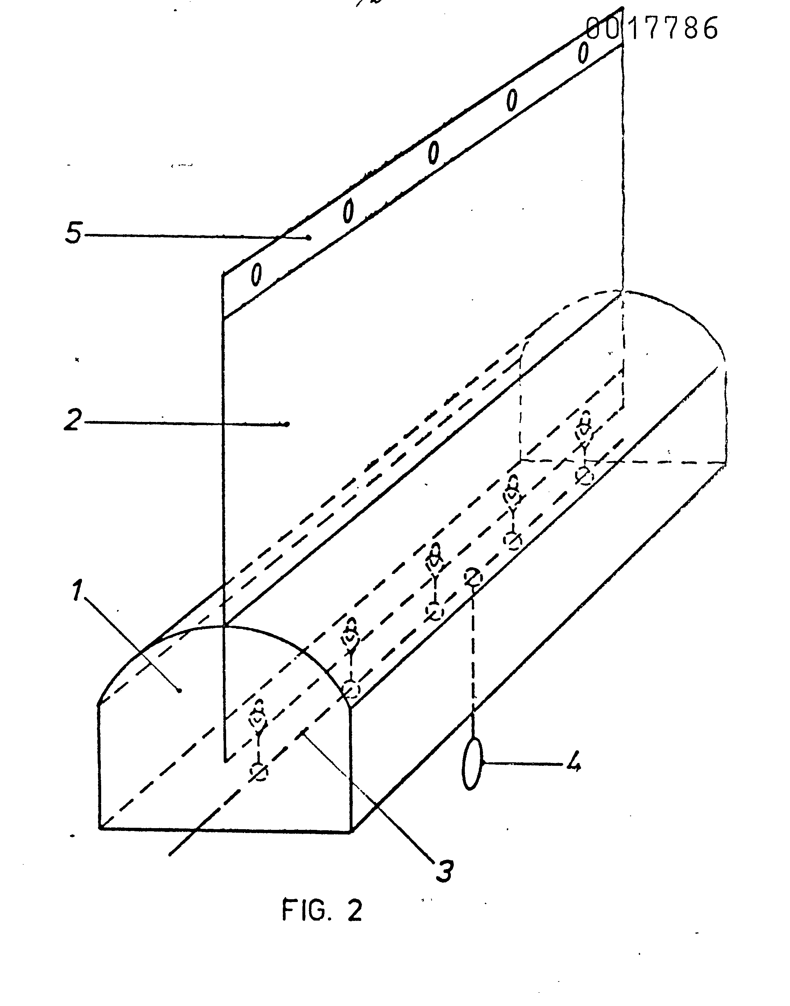

㉗ Zur Eindämmung von ausgelaufenem Rohöl wird ein kontinuierlicher Schaumstrang (1) aus nahezu offenporigem Kunststoffweichschaum mit einem möglichst niedrigen Raumgewicht und möglichst kleinem Elastizitätsmodul erzeugt. Dieser Schaumstrang (1) wird kontinuierlich in ein Vlies gemäss Fig. 1 und 2 und um eine Vliesschürze (2) herum, vorzugsweise von einem Schiff aus, mit einer Geschwindigkeit von 3 - 5 m pro Minute erzeugt. Die Vliesschürze (2) enthält zentrale Verstärkungselemente (3, 4), um ein Auseinanderreissen des Schaumstrangs (1) durch die bei hohem Seegang auftretenden Kräfte zu unterbinden. Mit den Verstärkungselementen (3, 4) wird gleichzeitig der Abzug des Schaumstrangs (1) aus der Schäummaschine bewerkstelligt.

0017786

## Verfahren zur Vermeidung der Ausbreitung von durch Tankerunfälle auf dem Meer ausgelaufenem Rohöl

Tankerunfälle ergeben durch das ausgelaufene Rohöl eine erhebliche Verschmutzung von Küsten, eine Vernichtung von Austernfeldern usw. Bisher hat man versucht, durch Aufsprühen von Chemikalien dieses Rohöl zu binden. Die Versuche sind jedoch wenig erfolgreich, da die Chemikalien stets nur an der Oberfläche einer oft mehrere Zentimeter dicken Rohölschicht wirksam sind. Ein anderes Verfahren besteht darin, eine fertiggestellte Kunststoffschürze mit Bojen im Wasser zu verankern.

Der Nachteil dieses Verfahrens besteht außer in den hohen Aufstellungskosten darin, daß zum Auslegen und zur Abgrenzung eines Ölfeldes nur Spezialschiffe größerer Tonnagen verwendet werden können, wie sie nicht überall zur Verfügung stehen. Überdies werden für die Lagerung eines derartigen Systems riesige Lagerflächen benötigt. Im Falle des obengenannten Tankerunfalles ist es aber erforderlich, möglichst schnell Häfen, Austernzuchten usw. gegen sich ausbreitendes Rohöl abzuschirmen.

Aufgabe der Erfindung ist es daher, ein System zu entwickeln, das so wenig Platz beansprucht und so gebaut ist, daß es z.B. auf jedem normalen Fischerboot eingesetzt werden kann. Austernzuchten z.B. befinden sich oft im Bereich großer Gezeitenunterschiede, so daß ein Schutz der Küste nur mit Booten geringen Tiefgangs durchgeführt werden kann.

Gegenstand der Erfindung ist somit ein Verfahren zur Vermeidung der Ausbreitung von durch Tankerunfälle auf dem Meer ausgelaufendem Rohöl, dadurch gekennzeichnet, daß von einem beliebigen Schiff aus kontinuierlich ein Schwimmkörper aus geschlossenzelligem oder teilweise geschlossenzelligem Weichschaumstoff mit partiell eingeschäumter Kunststofffolie oder eingeschäumtem Kunststoffvlies direkt und von beliebiger Länge dergestalt hergestellt wird, daß das auf dem Wasser schwimmende Ölfeld sicher eingekreist wird, wonach das Rohöl anschließend, vorzugsweise durch Abpumpen, entfernt wird.

Bevorzugt ist ein Verfahren, das darin besteht, daß in dem Schwimmkörper ebenfalls kontinuierlich ein

<u>Le A 19 542</u>

0017786

Kunststoffvlies oder Kunststoffgewebe oder eine Kunststoffolie von der Länge des Schwimmkörpers und einer
Breite von mindestens 1 m, höchstens jedoch 4 m, so
eingeschäumt wird, daß das Vlies, das Gewebe oder die
Folie senkrecht zur Wasseroberfläche gerichtet ist und
ähnlich wie der Kiel eines Schiffes des im Querschnitt
beliebigen, vorzugsweise jedoch kreissegmentartigen
Schwimmkörpers untergebracht ist.

Bevorzugt ist erfindungsgemäß, daß die Kanten des
Vlieses, Gewebes oder der Folie Verstärkungselemente
enthalten, an die z.B. Ketten oder Anker zur Beschwerung angebracht werden können.

Ferner ist es erfindungsgemäß vorteilhaft, daß im
Kunststoffkörper ein Kunststofftau eingeschäumt wird,
das mit der Kunststoffschürze verbunden wird und
einerseits das Zerreißen durch die Wasserbewegung
unterbinden andererseits der Anbringung von Schlaufen für die Befestigung von Ankerbojen dienen soll.

Bevorzugt ist auch, daß der geschäumte Schwimmkörper etwa ein Raumgewicht von 20 bis 40 kg/m$^3$ aufweist und als Außenhaut eine geschlossene, wasserundurchlässige Oberfläche in Form einer elastischen,
mindestens einige mm dicken Schwarte aufweist.

Der Schwimmkörper besteht bevorzugt aus Polyurethanschaumstoff, kann aber auch aus einem anderen, beliebigen Schaumstoff aufgebaut sein.

Le A 19 542

Bei der Polyurethanschaumstoffherstellung werden die an sich bekannten Polyisocyanate mit den an sich bekannten Polyolen vom Molekulargewicht in der Regel von 400 - 10 000 in Gegenwart von Treibmitteln und gegebenenfalls in Gegenwart von Katalysatoren, Stabilisatoren, Kettenverlängerungsmitteln vom Molekulargewicht bis 400 und weitere an sich bekannte Hilfs- und Zusatzstoffen umgesetzt.

Die relativ geringen Abmessungen der zur Herstellung des erfindungsgemäßen Schwimmkörpers erforderlichen Geräte ermöglichen den Transport auf Lastwagen, so daß vom Ereignis des Unfalls bis zum Auslegen des Schwimmkörpers nicht mehr als 6 Stunden zu vergehen brauchen und damit die Küsten rechtzeitig geschützt werden können. Es besteht natürlich auch die Möglichkeit, mit mehreren Systemen gleichzeitig einen geschlossenen Ring um das havarierte Schiff zu legen und so eine weitere Ausbreitung des auslaufenden Öls in Richtung der Küste zu verhindern. Es besteht aber auch die Möglichkeit, die Herstellung des Schwimmkörpers an Land vorzunehmen und ihn dann mit geeigneten Booten auf das Wasser hinauszuziehen.

Teil der Erfindung ist es, einen kontinuierlichen Schaumkörper von geringem Raumgewicht und einer solchen Elastizität herzustellen, daß der Schwimmkörper immer und an allen Punkten auf der Wasseroberfläche aufliegt und dies auch bei bewegter See. Es ist nämlich auch bekannt, z.B. aufblasbare

Le A 19 542

Schwimmkörper zur Abdämmung gegen Rohöl zu verwenden. Aufblasbare Schwimmkörper haben jedoch eine so hohe Längssteifigkeit, daß sie bei hohem Seegang nur punktweise aufliegen und das Rohöl unter dem Schwimmkörper hindurch oder über den Schwimmkörper hinweggespült wird.

Im vorliegenden Fall wird dies durch die Verbindung eines bleibend elastischen Schaummaterials in Verbindung mit einem geeigneten, vorzugsweise kreissegmentförmig ausgebildeten Querschnitt mit einer eingeschäumten Kunststoffschürze, vorzugsweise aus reißfestem Kunststoffvlies, wirksam verhindert. Fig. 2 zeigt einen Schwimmkörper, der nach einer Ausführungsform des Verfahrens gemäß Erfindung hergestellt worden ist und die z.B. darin besteht, daß eine Polyurethanschäummaschine auf einem Boot plaziert wird. Die bei der Schaumstoffherstellung erforderlichen Transportbänder befinden sich in z.B. einem spitzen oder im rechten Winkel zueinander und stoßen an der Unterkante, also dort, wo der spitze Winkel sich befindet, zusammen. Dadurch ist die Möglichkeit gegeben, an dieser Stelle von einer Rolle die Vliesschürze (2) in diesem Spalt der Transportbänder automatisch mit einziehen zu lassen. Die Transportbänder bilden also einen dreieckigen Trog, in dem sich auch ein Teil des Vlieses und außerdem (von einer zweiten Rolle) ein Kunststofftau (3) befindet, so daß nach Einbringen der zu schäumenden Kunststoffmasse (1) in den obengenannten Trog und

<u>Le A 19 542</u>

deren Aufschäumen ein inniger Kontakt zwischen dem Vlies und der Kunststoffmasse bzw. dem Tau hergestellt wird. Das aufgeschäumte Material läuft als kontinuierlicher Block (1) mit z.B. kreissegmentförmigen Querschnitt hinter dem Schiff auf das Wasser ab und kann dort weiter aushärten.

In der Fig. 1 ist ein Schwimmkörper perspektivisch dargestellt. Darin bedeuten (1) der geschäumte Schwimmkörper, (2) das Kunststoffvlies, (3) das Verstärkungstau mit Schlaufe (4), (5) die Verstärkung der Unterkante des Vlies mit angebrachten Gewichten (6).

Bei einer anderen Ausführungsform wird als Transportvorrichtung ein mit Transportbändern ausgerüsteter Polymerisationstrog von kreisförmigem oder rechteckigem Querschnitt verwendet, in den von oben die Kunststoffschürze so eingehängt wird, daß sie sich in der Mitte des geschäumten Blockes befindet (Fig. 2). Das zu verschäumende Material wird in bekannter Weise in den Trog gegeben und umschließt beim Aufschäumen die Kunststoffschürze. Zur Erläuterung sei ein Beispiel angeführt:

<u>Le A 19 542</u>

**Beispiel**

Eine mit Verstärkungstauen versehene Vliesschürze aus Polypropylen mit einem Flächengewicht von 200 g/m$^2$ wird von einer Rolle mit einer Rollenbreite von 2 m in die Mitte des für die Aufnahme des zu schäumenden bzw. geschäumten Materials bestimmten Transportbandes so eingehängt, daß es im geschäumten Block, der im Querschnitt eine Breite von ca. 1 m und eine Höhe von ca. 60 cm hat, ca. 50 cm eingeschäumt ist. Mit dem Transport des fertig geschäumten Blockes wird also von der Rolle immer neues Vlies nachgeführt.

Zum Schäumen verwendet man z.B. folgende Materialien:

100,0 Gew.-Teile trifunktionelles Ethylenoxid/Propylenoxid Polyetherpolyol

54,0 Gew.-Teile Toluylendiisocyanat (80/20-Isomerengemisch)

4,5 Gew.-Teile Wasser

1,2 Gew.-Teile Polyetherpolysiloxan als Stabilisator

0,12 Gew.-Teile Triethylendiamin

0,2 Gew.-Teile Zinndioctoat

Es ist darauf zu achten, daß das Kunststoffvlies bereits mit dem noch nicht aufgeschäumten Material benetzt wird, um eine gute Haftung zu erzielen.

Le A 19 542

Der fertig geschäumte Block verläßt je nach Einstellung der Schäummaschine das Transportband mit einer Geschwindigkeit von ca. 3 - 5 m/Minute und wird nach erfolgtem Aushärten direkt - sofern die Herstellung an Land erfolgt, mit einem Boot - auf das Wasser hinausgezogen.

Le A 19 542

0017786

### Patentansprüche

1. Verfahren zur Vermeidung der Ausbreitung von durch Tankerunfälle auf dem Meer ausgelaufenem Rohöl, dadurch gekennzeichnet, daß von einem beliebigen Schiff aus kontinuierlich ein Schwimmkörper aus geschlossenzelligem oder teilweise geschlossenzelligem Weichschaumstoff mit partiell eingeschäumter Kunststoffolie oder eingeschäumtem Kunststoffvlies direkt und von beliebiger Länge dergestalt hergestellt wird, daß das auf dem Wasser schwimmende Ölfeld sicher eingekreist wird, wonach das Rohöl anschließend, vorzugsweise durch Abpumpen, entfernt wird.

2. Verfahren nach Anspruch 1 und 2, dadurch gekennzeichnet, daß in dem Schwimmkörper ebenfalls kontinuierlich ein Kunststoffvlies oder Kunststoffgewebe oder eine Kunststoffolie von der Länge des Schwimmkörpers und einer Breite von mindestens 1 m, höchstens jedoch 4 m, so eingeschäumt wird, daß das Vlies, das Gewebe oder die Folie senkrecht zur Wasseroberfläche gerichtet ist und ähnlich wie der Kiel eines Schiffes des im Querschnitt beliebigen, vorzugsweise jedoch kreissegmentartigen Schwimmkörpers untergebracht ist.

3. Verfahren nach Anspruch 1 und 2, dadurch gekennzeichnet, daß die Kanten des Vlieses, Gewebes oder der Folie Verstärkungselemente enthalten, an die

Le A 19 542

z.B. Ketten oder Anker zur Beschwerung angebracht werden können.

4. Verfahren nach Anspruch 1 bis 3, dadurch gekennzeichnet, daß im Kunststoffkörper ein Kunststofftau eingeschäumt wird, das mit der Kunststoffschürze verbunden wird und einerseits das Zerreißen
durch die Wasserbewegung unterbinden, andererseits
der Anbringung von Schlaufen für die Befestigung
von Ankerbojen dienen soll.

5. Verfahren nach Anspruch 1 bis 5, dadurch gekennzeichnet, daß der geschäumte Schwimmkörper etwa
ein Raumgewicht von 20 bis 40 kg/m$^3$ aufweist und
als Außenhaut eine geschlossene, wasserundurchlässige Oberfläche in Form einer elastischen, mindestens einige mm dicken Schwarte aufweist.

6. Verfahren nach Anspruch 1 - 6, dadurch gekennzeichnet, daß der Schwimmkörper aus Polyurethanschaumstoff besteht.

Le A 19 542

FIG. 1

0017786

0017786

5

2

1

4

3

FIG. 2

Europäisches Patentamt

**EUROPÄISCHER RECHERCHENBERICHT**

0017786

EP 80 10 1484

| | **EINSCHLÄGIGE DOKUMENTE** | | KLASSIFIKATION DER ANMELDUNG · Int. Cl. |
|---|---|---|---|
| Kategorie | Kennzeichnung des Dokuments mit Angabe, soweit erforderlich, der maßgeblichen Teile | betrifft Anspruch | E 02 B 15/04 |
| X | <u>FR - A - 2 158 710</u> (MAS) <br> * Seite 4, Zeilen 6-30; Seite 5, Zeilen 1-21; Seite 6, Zeile 16; Seite 7, Zeilen 10-16; Figuren 1,2,4 * <br><br> -- | 1-6 | |
| | <u>DE - A - 1 484 368</u> (NEIRAD) <br> * Seiten 7-9; Figuren 2-4 * <br><br> -- | 1,2,5 | |
| | <u>FR - A - 2 215 073</u> (KLEBER-COLOMBES) <br> * Seite 4, Zeilen 19-29; Seite 5, Zeilen 1-9; Seite 6, Zeilen 4-21; Figuren 1-3,5 * <br><br> -- | 1,3 | RECHERCHIERTE SACHGEBIETE · Int. Cl. |
| A | <u>FR - A - 2 329 808</u> (ALTHAUS) <br> * Seite 1; Figuren * <br><br> ---- | 1 | |

KATEGORIE DER GENANNTEN DOKUMENTE

X von besonderer Bedeutung
A technologischer Hintergrund
O nichtschriftliche Offenbarung
P Zwischenliteratur
T der Erfindung zugrunde liegende Theorien oder Grundsätze
E kollidierende Anmeldung
D in der Anmeldung angeführtes Dokument
L aus andern Gründen angeführtes Dokument
& Mitglied der gleichen Patentfamilie, übereinstimmendes Dokument

Der vorliegende Recherchenbericht wurde für alle Patentansprüche erstellt.

| Recherchenort Den Haag | Abschlußdatum der Recherche 01-08-1980 | Prüfer HANNAART |
|---|---|---|

EPA form 1503.1 06 78